# EUROPEAN PATENT SPECIFICATION

(11) **EP 0 868 000 B1**
(45) Date of publication and mention of the grant of the patent: **30.04.2008**
(21) Application number: 98104256.7
(22) Date of filing: 10.03.1998
(51) Int. Cl.: H02J 3/18, H02J 5/00, H02J 3/36, H02M 1/12, H02J 3/01

(54) **A plant for transmitting electric power, with regulation of reactive power**
Anlage zur elektrischen Kraftübertragung, mit Blindleistungsreglung
Installation de transmission d'énergie électrique, avec commande de puissance réactive

(30) Priority: 24.03.1997 SE 9701061
(43) Date of publication of application: 30.09.1998
(73) Proprietor: ABB AB, 721 83 Västerås (SE)
(72) Inventor: Pålsson, Rolf, 772 04 Saxdalen (SE); Svensson, Kjell, 771 41 Ludvika (SE)
(74) Representative: Olsson, Jan

(56) References cited:
- US-A- 4 903 184
- US-A- 5 051 683
- US-A- 5 535 113
- ANDERS LINDBERG,"PWM AND CONTROL OF TWO AND THREE LEVEL HIGH POWER VOLTAGE SOURCE CONVERTERS", 1995, ISSN-1100-1615.TRITA-EHE 9501, (STOCKHOLM), XP002900133 * see ch.5.3.1,ch.5.3.3,first paragraph *

## Description

### FIELD OF THE INVENTION AND PRIOR ART

The present invention relates to a plant for transmitting electric power comprising a direct voltage network and at least one alternating voltage network connected thereto through a station, said station being adapted to perform transmitting of electric power between the direct voltage network and the alternating voltage network and comprising at least one VSC converter adapted to convert direct voltage into alternating voltage and conversely and an apparatus for controlling the converter, said plant further comprising means adapted to calculate a pulse width modulation pattern according to which the apparatus is adapted to control the converter for alternating voltage generation based upon a reference alternating voltage calculated from orders of consumption of reactive and active power given to the converter and the magnitude of the direct voltage of the direct voltage network at the station.

Such a plant has recently become known through the thesis "PWM and control of two and three level high power voltage source converters" by Anders Lindberg, Kungliga Tekniska Hogskolan, Stockholm, 1995, in which publication such a plant for transmitting electric power through a direct voltage network for High Voltage Direct Current (HVDC) is described. It is pointed out that the invention is not restricted to this application, but for illuminating but accordingly not limiting the invention exactly this application of plants of the type defined above will be discussed hereinafter.

Before the issuance of said thesis plants for transmitting electric power through a direct voltage network for High Voltage Direct Current have been based upon the use of linecommutated converters with thyristors or ion valves and CSC (Current Source Converter) converters. By the development of IGBTs (Insulated Gate Bipolar Transistor = bipolar transistor having an insulated gate) for high voltage applications and the suitability to connect them in series in valves in converters, since they may easily be turned on and turned off simultaneously, VSC (Voltage Source Converter) converters for forced commutation have now instead become an alternative, and this type of transmission of electric power between a direct voltage network for High Voltage Direct Current being voltage stiff therethrough and alternating voltage networks connected thereto offers several important advantages with respect to the use of line-commutated CSCs in HVDC, of which it may be mentioned that the consumption of active and reactive power may be controlled independently of each other and there is no risk of commutation failures in the converter and by that no risk of transmission of commutation failures between different HVDC links, which may take place in line-commutation. Furthermore, there is a possibility to feed a weak alternating voltage network or a network without a generation of its own (a dead alternating voltage network). Further advantages are also there.

In a plant of the type mentioned in the introduction problems arise when the direct voltage on the direct voltage side of the station suddenly sinks or the alternating voltage on the alternating voltage side of the station suddenly increases, i.e. if the alternating voltage becomes too high with respect to the direct voltage for fulfilling the orders set. This may for example happen upon a suddenly increasing tapping of active power of said alternating voltage network, and even if the plant in question has a further station having an alternating voltage network connected thereto and this station is adapted to try to keep the direct voltage of the direct voltage network at a predetermined nominal value, the voltage regulation of this station will not manage to obtain the corresponding power increase in towards the direct voltage side, so that the direct voltage sinks. Thus, in such a case the alternating voltage gets too high with respect to the direct voltage as a consequence of the sinking direct voltage. The problem so arisen is associated with said means for calculating the pulse width modulation pattern, since a so-called overmodulation occurs when a too high reference alternating voltage is reached with respect to the direct voltage. The consequence of this is that other harmonics than the characteristic ones are generated and by that disturbances are created in the networks and the equipment connected thereto, but would the measure be taken to frankly lower said reference alternating voltage for avoiding the overmodulation the active and reactive current orders on the alternating voltage side could not be obtained.

US-A-5 051 683 discloses a plant having a self-commutated inverter arranged between the plates of a capacitor of a direct voltage side and an alternating voltage network through an interconnected transformer. The output of reactive power from the inverter is there Controlled for eliminating uncontrolled reactive power at the beginning of the operation of a unit for controlling reactive power. The object of this plant is to meet a determined order of reactive power also during the starting sequence. Different calculations of the way to control the consumption of reactive power are carried out, in which the alternating voltage amplitude and the direct voltage amplitude are included in the calculation of the magnitude of this reactive power. However, it is already known conventional technique to restrict the modulation requirements to values being less than or equal to 1.

### SUMMARY OF THE INVENTION

The object of the present invention is to provide a plant of the type defined in the introduction, in which the problem mentioned above of overmodulation and additional harmonics generated thereby is solved in an acceptable way.

This object is according to the invention obtained by providing a plant of the type defined in the introduction with members adapted to compare the amplitude of said reference alternating voltage with the direct voltage on the direct voltage side of the station between the two poles of the direct voltage network and when the quotient of the reference alternating voltage amplitude/half of said direct voltage exceeds a predetermined value send a signal to the control apparatus, and the control apparatus is adapted to interpret the receipt of such a signal as an order to increase the consumption of reactive power of the alternating voltage side of the station and control the converter in accordance with this order.

By the fact that the control apparatus register the receipt of an order of increased consumption of reactive power when said quotient exceeds said predetermined value, the reactive power consumption is increased, which means that the fundamental voltage produced by the converter will be lower, i.e. the amplitude of the reference alternating voltage is lowered, which requires a lower direct voltage. Thus, it is in this way possible to lower the value of said quotient, in which said predetermined value may be set so that overmodulation occurs upon exceeding thereof or just above that value, and in this way the overmodulation is eliminated and no other harmonics than the characteristic ones will be generated in the pulse width modulation.

According to a preferred embodiment of the invention said members are adapted to send said signal to the control apparatus when said quotient exceeds a value being substantially 1. By choosing said predetermined value of the quotient in this way said signal resulting in an order of increased consumption of reactive power will occur at a relationship between the direct voltage and the alternating voltage, which in the most common type of pulse width modulation means a lower limit for said overmodulation, so that this may by this efficiently be avoided while continuously achieving active and reactive current orders.

According to another preferred embodiment of the invention said member is adapted to make the nature of said signal de-pendent upon the magnitude of said quotient, and the control apparatus is adapted to register an addition to the previous order of said consumption of reactive power, which is the larger the larger said quotient is. It is by this obtained that the amplitude of the reference voltage is lowered more the larger said quotient would be, i.e. the larger the unbalance between the alternating voltage and the direct voltage gets, so that the amplitude lowering of the reference alternating voltage gets higher through the order of an addition to the reactive power to be consumed.

According to another preferred embodiment of the invention the apparatus is adapted to, after receipt of said signal, during a certain period of time control the converter in accordance with an order of continuously increased consumption of reactive power and then according to an order of consumption of reactive power on a substantially constant, higher level than before the receipt of said signal. By increasing the consumption of reactive power imposed on the converter all the time as long as said quotient exceeds the critical value, the amplitude of the reference alternating voltage may be lowered until it has arrived to an acceptable level.

According to another preferred embodiment of the invention said members are adapted to send a signal to the control apparatus as soon as said quotient after having exceeded said predetermined value sinks therebelow again, and the control apparatus is adapted to interpret the receipt of the signal last mentioned as an order of consumption of reactive power on a substantially constant, higher level than before the receipt of said signal. It is by this ensured that the plant will have the time to come into balance before the order of increased consumption of reactive power has been removed, for example by the fact that another voltage-regulating station included in the plant has managed to increase the direct voltage to a level avoiding the problem mentioned above.

According to another preferred embodiment of the invention the plant comprises members adapted to register the peak value of the alternating current on the alternating voltage side of the station and to control the increase of the consumption of reactive power on the alternating voltage side of the station so that a determined upper permitted limit for said peak value is not exceeded. By the presence of this member it is avoided that the peak value of the alternating voltage current increases to such a high level that an overcurrent protection is triggered and for example the converter or the station in question is temporarily switched off.

According to another preferred embodiment of the invention the plant comprises means for calculating said pulse width modulation pattern, which is adapted to determine the width of the direct current pulses thereof by determining intersection points of said reference alternating voltage and an imagined triangle wave having an amplitude of half the direct voltage between the two poles of the direct voltage network at the station and a frequency being several times higher than that of the reference alternating voltage. This way to create a pulse width modulation pattern is suitable in this type of plants and it will then be easy by an appropriate choice of said predetermined value to avoid an overmodulation in such a plant, which occurs as soon as the amplitude of the triangle wave, which is identical to half the direct voltage between the two poles of the direct voltage network, sinks below the amplitude of the reference alternating voltage.

According to another preferred embodiment of the invention the plant comprises members for measuring the direct voltage of the direct voltage network at the station and these are adapted to send information thereabout to said comparing members, which in combination with a further embodiment of the invention, in which the plant comprises members adapted to measure the alternating voltage of the alternating voltage network at the station and on the basis thereof calculate the reference alternating voltage and send information thereabout to the comparing member, it will by very simple means through a comparison of said two voltage values measured be possible to determine whether overmodulation is present or not and if an order of increased reactive power consumption is to be given to the converter of the station.

According to another preferred embodiment of the invention the plant comprises at least a second alternating voltage network connected through a second station, said second station being adapted to perform transmitting of electric power between the direct voltage network and the second alternating voltage network and comprising at least one VSC converter adapted to convert direct voltage to alternating voltage and conversely and an apparatus for controlling the converter, and the apparatus of the second station is adapted to control the converter of that station for regulating the direct voltage of the direct voltage network at this station for keeping this at a determined nominal value. A reliable operation with a minimized risk of different disturbances of a plant of this type is by this obtained, which through the existence of said voltage-regulating station is to be considered as voltage-stiff. However, the voltage regulation that may be carried out thereby is normally not sufficient for obtaining a corresponding power increase in towards the direct voltage network at the second station upon an increased power tapping at said first station, so that also in such a plant the direct voltage will then sink and by that said quotient increase.

According to another preferred embodiment of the invention the plant is designed for transmitting electric power through a direct voltage network for high voltage direct current (HVDC). The advantages of the plant according to the invention are particularly apparent in this preferred application.

Further advantages as well as advantageous features of the invention will appear from the following description and the other dependent claims.

### BRIEF DESCRIPTION OF THE DRAWINGS

With reference to the appended drawings, below follows a description of a preferred embodiment of the invention cited as an example.

In the drawings:
Fig 1 is a very schematic diagram illustrating the principles of the invention,
Fig 2 is a graph illustrating the principles of pulse width modulation of a converter by comparing a triangle wave and a reference voltage,
Fig 3 is a view substantially corresponding to Fig 2 and illustrating the occurrence of overmodulation in the pulse width modulation,
Fig 4 is a very simple view, by means of which the principle of the invention may be explained, and
Fig 5 is a graph illustrating the progress of the additional consumption of reactive power of the plant according to Fig 1 versus the time when an overmodulation state occurs.

### DETAILED DESCRIPTION OF A PREFERRED EMBODIMENT OF THE INVENTION

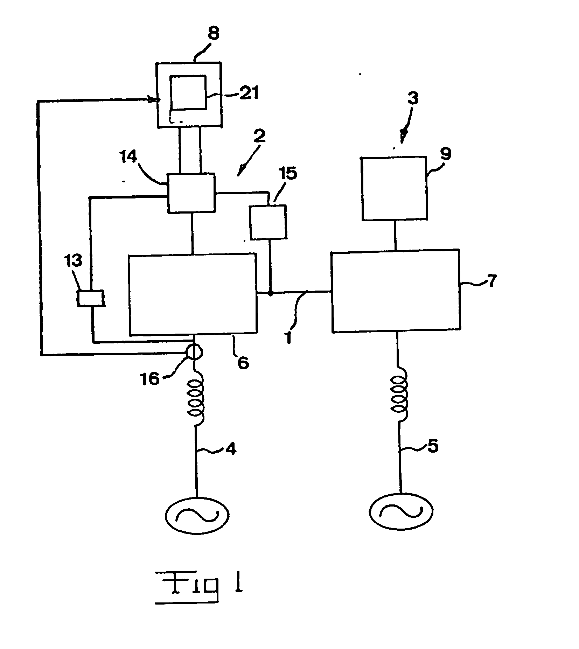

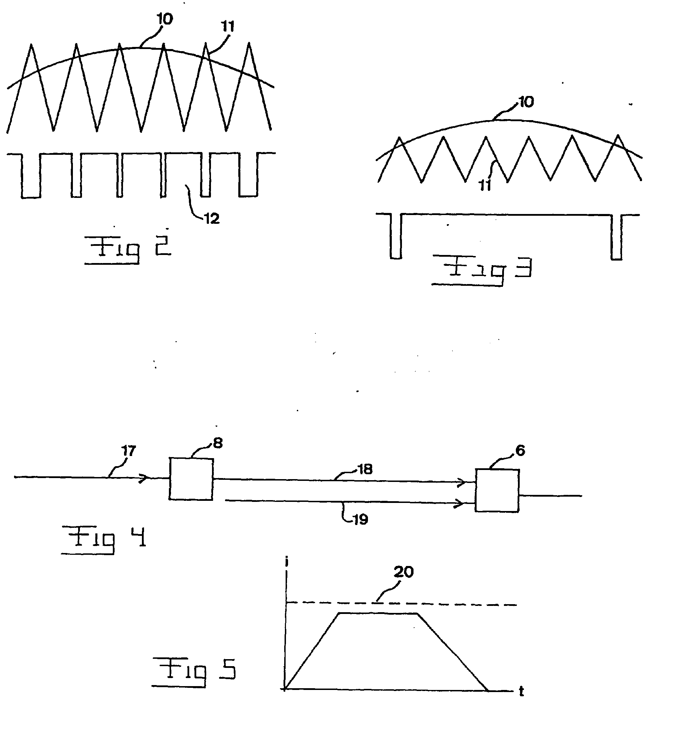

A structure of a plant for transmitting electric power according to the invention is very schematically illustrated in Fig 1, in which only the different components having directly anything to do with the function according to the invention has been shown in the drawings for facilitating the comprehension of the invention. The plant comprises a direct voltage network 1 for High Voltage Direct Current (HVDC = High Voltage Direct Current), and in the present case two alternating voltage networks 4, 5 connected to the direct voltage network through a station 2, 3 each, which are indicated by an alternating voltage symbol and an inductance. The stations are adapted to perform transmitting of electric power between the direct voltage network 1 and the respective alternating voltage network, in which the power may be fed in from an alternating voltage network to the direct voltage network or fed out from the direct voltage network to an alternating voltage network. Thus, the alternating voltage networks may have generators of electric power or only be connected to consumers thereof. The stations comprise each at least one VSC converter 6, 7 adapted to convert direct voltage into alternating voltage and conversely. However, it is possible that one station comprises a plurality of such converters, but these are in the present case summarized by one single box for each station. It is also possible that the alternating voltage networks have more than one phase, most often three phases, but the phases of the alternating voltage network are summarized in the figure by one single line. The respective VSC converter comprises in a conventional way so-called valves, which consist of branches of breakers of turn-on and turn-off type connected in series, preferably in the form of IGBTs, and in a conventional way diodes connected in anti-parallel there-with. A great number of IGBTs may for example be connected in series in one single valve so as to be turned on and turned off simultaneously so as to function as one single breaker, wherethrough the voltage across the valve may be distributed among the different breakers connected in series. The control of the breakers takes place in a conventional way through pulse width modulation (PWM), the principles of which will be explained further below with reference to Fig 1 and 3.

The stations comprise further an apparatus 8, 9 each schematically indicated and for controlling the respective converter 6, 7. One 3 of the stations is adapted to be in voltage-regulating mode, in which the regulation takes place in a conventional way by the way in which the control pulses to the different valves of the converter are formed. The voltage-regulating station 3 attempts to maintain the voltage of the direct voltage network at a determined nominal value, in which this definition also comprises the case of keeping the direct voltage value within a predetermined interval permitted.

The principle of the pulse width modulation mentioned above will now be explained with reference to both Fig 1 and 2. The alternating voltage generated by the converter and calculated by the existing power consumption in the alternating voltage network is designed as the reference alternating voltage 10 and has a sine-wave progress. For determining the width and direction of the pulses to be generated by the converter an imagined triangle wave 11 having a frequency being several times higher than the frequency of the reference alternating voltage is utilized, and the amplitude of this wave is determined by the voltage between the poles of the direct voltage network 1 at the station 2 to be one half of this direct voltage. By superimposing the "curves" 10 and 11 and determining the points of intersection of the reference alternating voltage curve 10 and the triangle wave 11 also the direction and the width of the direct voltage pulses generated by the converter 6 are determined. The respective pulse is directed in the opposite direction to the point of the triangle wave in question between two adjacent intersection points. The pulses are sent out with a frequency corresponding to the frequency of the triangle wave. The pulses 12 have an amplitude of half said direct voltage, i.e. the same amplitude as the triangle wave, and the pulses 12 are accordingly shown in a reduced scale with respect to the triangle wave in Fig 2. A schematically indicated means 21 takes care of the calculation of the pulse width modulation pattern. The voltage of the direct voltage network is preferably kept at such a level that the reference alternating voltage will intersect all the waves of the triangle wave with a certain margin, preferably about 10%, i.e. the amplitude of the triangle wave will be about 10% higher than the amplitude of the reference alternating voltage. Greater differences than so are not desired, since it costs to maintain a too high voltage in the direct voltage network. This means in turn that it may easily happen, when unbalances between the direct voltage side and the alternating voltage side occur, that the amplitude of the reference alternating voltage gets higher than that of the triangle wave imagined and by that some of the waves of the triangle wave will not be intersected by the reference alternating voltage curve, so that a so-called overmodulation occurs, which results in the impossibility to achieve the order set and other harmonics than the characteristic ones are generated in the different networks and in equipment connected thereto disturbing this. Alternating voltage filters present are dimensioned for these characteristic harmonics. The object of the invention is to minimize the risk of occurrence of such overmodulation, which is illustrated in Fig 3.

The second station 2 has members 13 adapted to measure the alternating voltage of the alternating voltage side of the station and send the alternating voltage value measured to a comparing member 14 as information about said reference alternating voltage. The plant also comprises members 15 adapted to measure the direct voltage of the direct voltage network 1 at the station 2 and send information thereabout to the comparing member 14. The comparing member 14 is adapted to compare the amplitude of the reference alternating voltage and the direct voltage on the direct voltage side of the station between the two poles of the direct voltage network and when the quotient reference alternating voltage amplitude/half said direct voltage exceeds a predetermined value send a signal to the control apparatus 8. This control apparatus is in its turn adapted to interpret a receipt of such a signal as an order of increased consumption of reactive power of the alternating voltage side of the station and control the converter 6 according to this order. Said predetermined value of said quotient is preferably set to be substantially identical to 1, so that said signal is sent away when overmodulation is on its way to occur. It may of course be advantageous to set this value just below 1, for example to 0.98, so as to minimize the duration of a possible overmodulation.

The function of the plant according to the invention is the following. When an alternating voltage of the alternating voltage network being abnormally high with respect to the direct voltage of the direct voltage network occurs, which may take place either through an increasing alternating voltage or through a sinking direct voltage, the comparing member 14 will send a signal to the control apparatus, which is to be interpreted as an order of an increased consumption of reactive power of the alternating voltage side of the station. The control apparatus 8 will form the control pulses thereof to the converter of the station for obtaining such an increased consumption of reactive power, and by that the amplitude of the reference alternating voltage also sinks, so that the overmodulation disappears. Thus, the increased consumption of reactive power means that the fundamental voltage produced by the converter gets lower, which requires lower direct voltage, so that the direct voltage available is sufficient. The plant has also members 16 for monitoring the peak value of the alternating currents, which are adapted to control the increase of the consumption of reactive power on the alternating voltage side of the station, so that a determined upper limit permitted for said peak value is not exceeded and it by that is avoided that any overcurrent protection is activated and temporarily blocks the converter in question or the entire station.

It is schematically illustrated in Fig 4 how a signal of overmodulation 17 arrives to the control apparatus 8 and by that except for a signal 8 already there for controlling the consumption of reactive power an additional signal 19 for an addition to the consumption of reactive power is sent to the converter 6.

It is illustrated in Fig 5 how the addition to the consumption of reactive power is developed over time when an overmodulation indicated is occurred at the point of time zero. Accordingly, there are first a ramping of said addition, which is shown through an increased alternating current i, during a certain period of time, in which this ramping is intended to take place until the signal about overmodulation is no longer sent out from the comparing member 14, i.e. overmodulation is no longer at hand. When the indication of overmodulation gets inactive this order of increased consumption of reactive power is maintained during a predetermined period of time, whereupon it is ramped down to zero again. The length of this procedure, from the beginning of the ramping up to the termination of the ramping down, is preferably in the order of 10 ms. Said limit for the peak value of the alternating current is indicated by the dashed line 20, and the order of increased consumption of power is accordingly made so that this peak value is not exceeded.

The method and the calculation of the pulse width modulation pattern described above are in practice carried out separately for each phase of the alternating voltage network.

The invention is of course not in any way restricted to the embodiment described above, but modifications are possible within the scope of the invention defined in the appended claims.

A plant may as already mentioned have an amount of components not shown in the drawings, such as for example harmonic filters for eliminating harmonic currents created in the pulse width modulation.

Although symbols have been shown in Fig 1 for some members, means or the like it is not at all necessary that these exist as separate components, but the functions they have to fulfil may very well be ensured by any component having also other tasks and for example values not be measured directly but calculated from values measured of any other quantity.

Furthermore, it is not at all necessary that the plant has a second station, as described above, but it may very well be so that it only has the first station, but it may also have more than two stations. It is then in the case of two or mote stations also possible that more than one of the stations, preferably all of them, have the features accord-ing to the invention being capable to solve the problem of overmodulation at exactly that station.

## Claims

1. A plant for transmitting electric power comprising a direct voltage network (1) and at least one alternating voltage network (4) connected thereto through a station (2), said station being adapted to perform transmitting of electric power between the direct voltage network and the alternating voltage network and comprising at least one VSC converter (6) adapted to convert direct voltage into alternating voltage and conversely and an apparatus (8) for controlling the converter, said plant further comprising means (21) adapted to calculate a pulse width modulation pattern according to which the apparatus is adapted to control the converter for alternating voltage generation based upon a reference alternating voltage (10) calculated from orders of consumption of reactive and active power given to the converter and the magnitude of the direct voltage of the direct voltage network at the station, **characterized in that** it also comprises members (14) adapted to compare the amplitude of said reference alternating voltage with the direct voltage on the direct voltage side of the station between the two poles of the direct voltage network and when the quotient of the reference alternating voltage amplitude/ half of said direct voltage exceeds a predetermined value send a signal to the control apparatus (8), and that the control apparatus is adapted to interpret the receipt of such a signal as an order to increase the consumption of reactive power of the alternating voltage side of the station and control the converter in accordance with this order.

2. A plant according to claim 1, **characterized in that** said members (14) are adapted to send said signal to the control apparatus (8) when a value of said quotient being substantially 1 is exceeded.

3. A plant according to claim 1 or 2, **characterized in that** the apparatus (8) is adapted to, after receipt of said signal, during a certain period of time control the converter in accordance with an order of continuously increased consumption of reactive power and then according to an order of consumption of reactive power on a substantially constant, higher level than before the receipt of said signal.

4. A plant according to any of claims 1-3 **characterized in that** said members (14) are adapted to send a signal to the control apparatus (8) as soon as said quotient after having exceeded said predetermined value sinks therebelow again, and that the control apparatus is adapted to interpret the receipt of the signal last mentioned as an order of consumption of reactive power on a substantially constant, higher level than before the receipt of said signal.

5. A plant according to any of claims 1-4, **characterized in that** it comprises members (16) adapted to register the peak value of the alternating current on the alternating voltage side of the station and to control the increase of the consumption of reactive power on the alternating voltage side of the station so that a determined upper permitted limit for said peak value is not exceeded.

6. A plant according to any of claims 1-5, **characterized in that** said means (21) for calculating said pulse width modulation pattern, which is adapted to determine the width of the direct current pulses thereof by determining intersection points of said reference alternating voltage and an imagined triangle wave having an amplitude of half the direct voltage between the two poles of the direct voltage network at the station and a frequency being several times higher than that of the reference alternating voltage.

7. A plant according to any of claims 1-6, **characterized in that** it comprises members (15) adapted to measure the direct voltage of the direct voltage network (1) at the station and send information thereabout to said comparing members (14).

8. A plant according to claims 6 and 7, **characterized in that** said members (15) for measuring the direct voltage of the direct voltage network is adapted to send information thereabout to said calculating means (21).

9. A plant according to any of claims 1-8, **characterized in that** it comprises members (13) adapted to measure the alternating voltage of the alternating voltage side of the station and based thereupon calculate the reference alternating voltage and send information thereabout to said comparing members (14).

10. A plant according to any of claims 1-9, **characterized in that** the control apparatus (8) is adapted to control the converter in accordance with an order of increased consumption of reactive power of the alternating voltage side of the station in the form of a transient influence in the order of milliseconds.

11. A plant according to any of claims 1-10, **characterized in that** it comprises at least a second alternating voltage network (5) connected through a second station (3), said second station being adapted to perform transmitting of electric power between the direct voltage network (1) and the second alternating voltage network and comprising at least one VSC converter (7) adapted to convert direct voltage to alternating voltage and conversely and an apparatus (9) for controlling the converter, and that the apparatus of the second station is adapted to control the converter of that station for regulating the direct voltage of the direct voltage network at this station for keeping this at a determined nominal value.

12. A plant according to any of claims 1-11, **characterized in that** it is designed for transmitting electric power through a direct voltage network (1) for High Voltage Direct Current (HVDC).

## Patentansprüche

1. Anlage zur Übertragung elektrischer Leistung, die ein Gleichspannungsnetzwerk (1) und mindestens ein Wechselspannungsnetzwerk (4) umfasst, das mit jenem durch eine Station (2) verbunden ist, wobei die Station angepasst ist, um eine Übertragung von elektrischer Leistung zwischen dem Gleichspannungsnetzwerk und dem Wechselspannungsnetzwerk auszuführen, und mindestens einen VSC-Umrichter (6), der angepasst ist, um Gleichspannung in Wechselspannung und umgekehrt umzuwandeln, und eine Vorrichtung (8) zur Steuerung des Umrichters umfasst, wobei die Anlage ferner ein Mittel (21) umfasst, das angepasst ist, um ein Pulsweitenmodulationsmuster zu berechnen, gemäß welchem die Vorrichtung angepasst ist, um den Umrichter zur Wechselspannungserzeugung auf der Grundlage einer Referenzwechselspannung (10) zu steuern, welche aus Blind- und Wirkleistungsverbrauchsbefehlen, die an den Umrichter gegeben werden, und der Größe der Gleichspannung des Gleichspannungsnetzwerks an der Station berechnet wird, **dadurch gekennzeichnet, dass** sie auch Elemente (14) umfasst, die angepasst sind, um die Amplitude der Referenzwechselspannung mit der Gleichspannung an der Gleichspannungsseite der Station zwischen den zwei Polen des Gleichspannungsnetzwerks zu vergleichen und ein Signal an die Steuerungsvorrichtung (8) zu senden, wenn der Quotient der Referenzwechselspannungsamplitude/die Hälfte der Gleichspannung einen vorbestimmten Wert überschreitet, und dass die Steuerungsvorrichtung angepasst ist, um den Empfang eines derartigen Signals als einen Befehl zur Erhöhung des Blindleistungsverbrauchs an der Wechselspannungsseite der Station zu interpretieren und den Umrichter gemäß diesem Befehl zu steuern.

2. Anlage nach Anspruch 1, **dadurch gekennzeichnet, dass** die Elemente (14) angepasst sind, um das Signal an die Steuerungsvorrichtung (8) zu senden, wenn ein Wert des Quotienten, der im Wesentlichen 1 ist, überschritten wird.

3. Anlage nach Anspruch 1 oder 2, **dadurch gekennzeichnet, dass** die Vorrichtung (8) angepasst ist, um nach dem Empfang des Signals für eine gewisse Zeitspanne den Umrichter gemäß einem Befehl eines kontinuierlich erhöhten Blindleistungsverbrauchs und dann gemäß einem Befehl eines Blindleistungsverbrauchs auf einem im Wesentlichen konstanten höheren Pegel als vor dem Empfang des Signals zu steuern.

4. Anlage nach einem der Ansprüche 1 - 3, **dadurch gekennzeichnet, dass** die Elemente (14) angepasst sind, um ein Signal an die Steuerungsvorrichtung (8) zu senden, sobald der Quotient nach dem Überschreiten des vorbestimmten Werts wieder darunter sinkt, und dass die Steuerungsvorrichtung angepasst ist, um den Empfang des zuletzt erwähnten Signals als einen Befehl eines Blindleistungsverbrauchs auf einen im Wesentlichen konstanten höheren Pegel als vor dem Empfang des Signals zu interpretieren.

5. Anlage nach einem der Ansprüche 1 - 4, **dadurch gekennzeichnet, dass** sie Elemente (16) umfasst, die angepasst sind, um den Spitzenwert des Wechselstroms an der Wechselspannungsseite der Station zu registrieren und den Anstieg des Blindleistungsverbrauchs an der Wechselspannungsseite der Station so zu steuern, dass eine bestimmte obere zulässige Grenze für den Spitzenwert nicht überschritten wird.

6. Anlage nach einem der Ansprüche 1 - 5, **dadurch gekennzeichnet, dass** das Mittel (21) zur Berechnung des Pulsweitenmodulationsmusters, welches angepasst ist, um die Breite der Gleichstromimpulse davon zu ermitteln, indem Schnittpunkte der Referenzwechselspannung und einer imaginären Dreieckswelle bestimmt werden, welche eine Amplitude der Hälfte der Gleichspannung zwischen den zwei Polen des Gleichspannungsnetzwerks an der Station und eine Frequenz aufweist, die um ein Mehrfaches höher als diejenige der Referenzwechselspannung ist.

7. Anlage nach einem der Ansprüche 1 - 6, **dadurch gekennzeichnet, dass** sie Elemente (15) umfasst, die angepasst sind, um die Gleichspannung des Gleichspannungsnetzwerks (1) an der Station zu messen und Informationen darüber an die Vergleichselemente (14) zu senden.

8. Anlage nach Anspruch 6 und 7, **dadurch gekennzeichnet, dass** die Elemente (15) zur Messung der Gleichspannung des Gleichspannungsnetzwerks angepasst sind, um Informationen darüber an das Berechnungsmittel (21) zu senden.

9. Anlage nach einem der Ansprüche 1 - 8, **dadurch gekennzeichnet, dass** sie Elemente (13) umfasst, die angepasst sind, um die Wechselspannung der Wechselspannungsseite der Station zu messen und auf der Grundlage davon die Referenzwechselspannung zu berechnen und Informationen darüber an die Vergleichselemente (14) zu senden.

10. Anlage nach einem der Ansprüche 1 - 9, **dadurch gekennzeichnet, dass** die Steuerungsvorrichtung (8) angepasst ist, um den Umrichter gemäß einem Befehl eines erhöhten Blindleistungsverbrauchs der Wechselspannungsseite der Station in der Form eines transienten Einflusses in der Größenordnung von Millisekunden zu steuern.

11. Anlage nach einem der Ansprüche 1 - 10, **dadurch gekennzeichnet, dass** sie mindestens ein zweites Wechselspannungsnetzwerk (5) umfasst, das durch eine zweite Station (3) verbunden ist, wobei die zweite Station angepasst ist, um ein Übertragen von elektrischer Leistung zwischen dem Gleichspannungsnetzwerk (1) und dem zweiten Wechselspannungsnetzwerk auszuführen, und mindestens einen VSC-Umrichter (7), der angepasst ist, um Gleichspannung in Wechselspannung und umgekehrt umzuwandeln, und eine Vorrichtung (9) zur Steuerung des Umrichters umfasst, und dass die Vorrichtung der zweiten Station angepasst ist, um den Umrichter dieser Station zur Regelung der Gleichspannung des Gleichspannungsnetzwerks an dieser Station zu steuern, um diese auf einem bestimmten Nennwert zu halten.

12. Anlage nach beliebigen der Ansprüche 1 - 11, **dadurch gekennzeichnet, dass** sie konzipiert ist, um elektrische Leistung durch ein Gleichspannungsnetzwerk (1) für Hochspannungsgleichstrom (HVDC) zu übertragen.

## Revendications

1. Installation de transmission d'énergie électrique comprenant un réseau à tension continue (1) et au moins un réseau à tension alternative (4) relié à celui-ci par un poste (2), ledit poste étant conçu pour réaliser la transmission d'énergie électrique entre le réseau à tension continue et le réseau à tension alternative et comprenant au moins un convertisseur VSC (6) conçu pour convertir la tension continue en tension alternative et inversement, et un appareil (8) pour commander le convertisseur, ladite installation comprenant de plus un moyen (21) conçu pour calculer une configuration de modulation d'impulsions en largeur selon laquelle l'appareil est conçu pour commander le convertisseur pour engendrer la tension alternative en se basant sur une tension alternative de référence (10) calculée à partir d'ordres de consommation de puissance réactive et active donnés au convertisseur et à l'intensité de la tension continue du réseau à tension continue au niveau du poste, **caractérisée en ce qu'**elle comprend également des éléments (14) conçus pour comparer la grandeur de ladite tension alternative de référence avec la tension continue du côté de la tension continue du poste entre les deux pôles du réseau à tension continue et, quand le quotient de la grandeur de la tension alternative de référence /moitié de ladite tension continue dépasse une valeur prédéterminée, envoyer un signal à l'appareil de commande (8), et **en ce que** l'appareil de commande est conçu pour interpréter la réception d'un tel signal comme un ordre pour augmenter la consommation de puissance réactive du côté de la tension alternative du poste et commander le convertisseur conformément à cet ordre.

2. Installation selon la revendication 1, **caractérisée en ce que** lesdits éléments (14) sont conçus pour envoyer ledit signal à l'appareil de commande (8) quand une valeur dudit quotient, qui est sensiblement de 1, est dépassée.

3. Installation selon la revendication 1 ou 2, **caractérisée en ce que** l'appareil (8) est conçu pour commander, après réception dudit signal, durant une certaine période de temps, le convertisseur conformément à un ordre de consommation de puissance réactive augmentée de manière continue et, ensuite, selon un ordre de consommation de puissance réactive sur un niveau sensiblement constant, plus élevé qu'avant la réception dudit signal.

4. Installation selon une quelconque des revendications 1-3, **caractérisée en ce que** lesdits éléments (14) sont conçus pour envoyer un signal à l'appareil de commande (8) dès que ledit quotient, après avoir dépassé ladite valeur prédéterminée, tombe de nouveau en dessous, et **en ce que** l'appareil de commande est conçu pour interpréter la réception du signal mentionné en dernier comme un ordre de consommation de puissance réactive sur un niveau sensiblement constant, plus élevé qu'avant la réception dudit signal.

5. Installation selon une quelconque des revendications 1-4, **caractérisée en ce qu'**il comprend des éléments (16) conçus pour enregistrer la valeur de pic du courant alternatif du côté de la tension alternative du poste et pour commander l'augmentation de la consommation de puissance réactive du côté de la tension alternative du poste de sorte qu'une limite déterminée supérieure permise pour ladite valeur de pic n'est pas dépassée.

6. Installation selon une quelconque-des revendications 1-5, **caractérisée en ce que** ledit moyen (21) pour calculer ladite configuration de modulation d'impulsions en largeur, qui- est conçue pour déterminer la largeur de ses impulsions de courant continu en déterminant des points d'intersection de ladite tension alternative de référence et d'une onde triangulaire imaginaire ayant une amplitude de la moitié de la tension continue entre les deux pôles du réseau à tension continue au niveau du poste et une fréquence qui est plusieurs fois supérieure à celle de la tension alternative de référence.

7. Installation selon une quelconque des revendications 1-6, **caractérisée en ce qu'**elle comprend des éléments (15) conçus pour mesurer la tension continue du réseau à tension continue (1) au niveau du poste et envoyer des informations à son sujet auxdits éléments de comparaison (14).

8. Installation selon la revendications 6 et 7, **caractérisée en ce que** lesdits éléments (15) pour mesurer la tension continue du réseau à tension continue sont conçus pour envoyer des informations à son sujet audit moyen de calcul (21).

9. Installation selon une quelconque des revendications 1-8, **caractérisée en ce qu'**elle comprend des éléments (13) conçus pour mesurer la tension alternative du côté de la tension alternative du poste et, en se basant sur cette-ci, calculer la tension alternative de référence et envoyer des informations à son sujet auxdits éléments de comparaison (14).

10. Installation selon une quelconque des revendications 1-9, **caractérisée en ce que** l'appareil de commande (8) est conçu pour commander le convertisseur conformément à un ordre de consommation augmentée de puissance réactive du côté de la tension alternative du poste sous la forme d'une action transitoire de l'ordre de millisecondes.

11. Installation selon une quelconque des revendications 1-10, **caractérisée en ce qu'**elle comprend au moins un second réseau à tension alternative (5) raccordé par un second poste (3), ledit second poste étant conçu pour réaliser la transmission d'énergie électrique entre le réseau à tension continue (1) et le second réseau à tension alternative et comprenant au moins un convertisseur VSC (7) conçu pour convertir la tension continue en tension alternative et inversement, et un appareil (9) pour commander le convertisseur, et **en ce que** l'appareil du second poste est conçu pour commander le convertisseur de ce poste pour réguler la tension continue du réseau à tension continue au niveau de ce poste pour conserver celle-ci à une valeur nominale déterminée.

12. Installation selon une quelconque des revendications-1-11, **caractérisée en ce qu'**elle est conçue pour transmettre de l'énergie électrique par un réseau à tension continue (1) pour courant continu haute tension (HVDC).
